# NEW EUROPEAN PATENT SPECIFICATION

(11) **EP 3 106 371 B2**
(45) Date of publication and mention of the opposition decision: **23.06.2021**
(45) Mention of the grant of the patent: 18.07.2018
(21) Application number: 15172030.7
(22) Date of filing: 15.06.2015
(51) Int. Cl.: B62D 25/20

(54) **A FLOOR SYSTEM**
FUSSBODENSYSTEM
SYSTÈME DE PLANCHER

(43) Date of publication of application: 21.12.2016
(73) Proprietor: Modul-System HH AB, 431 22 Mölndal (SE)
(72) Inventor: CARLSSON, Anders, SE-422 50 HISINGS BACKA (SE)
(74) Representative: AWA Sweden AB

(56) References cited:
- EP-A1- 2 842 804
- WO-A1-2005/037597
- WO-A1-2006/057596
- DE-A1- 10 233 419
- DE-U- 1 739 794
- DE-U- 1 899 149
- DE-U- 1 945 399
- DE-U1- 7 701 962
- DE-U1- 9 302 323
- DE-U1- 29 804 213
- DE-U1-202008 016 032
- DE-U1-202013 004 944
- bott VARIO: "Technisches Handbuch Fahrzeugeinrichtungen", March 2006 (2006-03)
- "Kapitel 3 Einbau" In: Bott GmbH: "Montage Schulungshandbuch zum bott Bott Montage-Specialis", November 2011 (2011-11) pages 1-3,39-50,122-124,
- ErgÃ Â¤nzende Montagedarstellung der Einschlagmutter, verfÃ Â¼gbar seit 02/2011
- T. Coblenz: "PEUGEOT BOXER L2H2 / L3H2 / L4H2", bott Montageanleitung, 13 October 2014 (2014-10-13), pages 1-28,
- Auszugsweise Darstellung der Homepage der Karl Limbach & Cie. GmbH & Co. KG Metallwarenfabrik, dokumentiert von der 'Wayback Machine'.

## Description

### Field of the Invention

The present invention relates to a floor system adapted to be arranged on an inner floor of a cargo or back space of a service vehicle.

### Technical Background

It is common practise in the art of service vehicles to equip a cargo space or a back space of an automotive vehicle with module units, for example cupboards, tool holders, shelves or other kind of module units. This is usually made in a separate step after the vehicle has been manufactured, i.e. the equipping of the vehicle in question is made separately from the manufacturing. Before the vehicle is equipped with specialised equipment, usually the cargo space of the vehicle is provided with a floor, usually made of wood, but the floor might also be made of for example an artificial, plastic material. The floor is usually loosely placed on the inner floor or fastened to the inner floor of the cargo space by fasteners, for example, screws which are screwed into the underlying floor or connected to a fastener, for example a ring fastener which is permanently installed in the cargo or back space of the service vehicle. This floor functions as a good support to work, stand and walk upon and is also used as an anchor plate for the module units. The module units may be fastened to the floor by screwing directly into the floor or to a fastening rail connected to the floor or to fastening elements. DE10233419A1 discloses a floor system according to the preamble of claim 1. WO2005/037597 discloses a device constructed as a floor plate or a floor and consists of rail sections and floor section parts and is fastened on the bottom plate of transport vehicles, such as vehicles with load floors for conversion to mini busses, according to the strict rules applicable for passenger transport up to 8 people, ambulances, rains, busses, trams etc. In the floor plate coverable recesses with retractors with ratchet construction are arranged for fastening wheelchairs. The floor and its rail and floor sections are not for fastening module units, for example cupboards, tool holders, shelves or other kind of module units.

The floor section parts are sections which covers the underlying floor over the whole length of the transport vehicle, and with the recesses with retractors arranged at predefined positions throughout the longitudinal direction of the floor sections in order to fasten wheelchairs. Further, the whole floor is assembled together before being arranged on the floor of the transport vehicle. Several persons may be used in order to install the floor on the bottom plate of transport vehicle.

Hence, the is still a need for an even more flexible system, which can be used for all kind of back spaces and cargo spaces of a service vehicle and for different kinds of module units, and which at the same time is easy and quick to install, safe and yet flexible in order to securing various sizes and different shapes of module units.

### Summary of the Invention

The object of the present invention is to provide a floor system that overcomes the above issues.

The invention is based on the insight that by having at least two floor panels, with integrated fastening elements, arranged next to each other in the driving direction of the vehicle, a flexible floor system is provided. The invention relates to a floor system adapted to be arranged on an inner floor of a cargo or back space of a service vehicle, said floor system comprising a first and a second floor panel, wherein a lateral side of said first floor panel is adapted to be arranged next to a lateral side of said second floor panel such that said sides are placed facing and adjacent to, or in contact with each other, and said first and said second floor panel are adapted to be arranged next to each other in the driving direction of the vehicle, each one of said first and said second floor panel comprises
- a top surface adapted to face the inside of the cargo or back space,
- an opposite bottom surface adapted to be arranged on said inner floor, and
- at least two fastening elements, each fastening element is at least partly arranged in said floor panel and completely surrounded by said top surface of said floor panel, whereby said first and/or said second floor panel comprises an inner threaded area, adapted to receive a matching threaded portion. By having several floor panels arranged in the driving direction of the vehicle a protective inner floor can be created.

The system is not limited to having only a first and a second floor panel. There may be more, for example, three or four or even more may be used. The amount of floor panels is dependent on the size of the floor panels and on the length of the cargo or the back space of the service vehicle. Preferably, the whole inner floor of the cargo or back space is covered by the floor panels in the longitudinal direction of the cargo or back space.

The floor panels may be connected to each other by, for example, matching fastening means or by a securing element, for example, a securing rail.

The fastening elements can be arranged in the floor panels where they are most needed, in order to fasten module units, for example cupboards, tool holders, shelves or other kind of module units. The fastening elements are preferably adapted to secure module units, such as cupboards, tool holders, shelves or other kind of module units.

Preferably, the lateral sides which are adapted to be arranged next to each other are arranged perpendicular to the driving direction of the vehicle.

According to at least one exemplary embodiment said first and said second floor panels comprise a rectangular shape.

According to at least one exemplary embodiment said at least two fastening elements of said first floor panel are arranged along a first lateral side of said first floor panel and they are distanced a substantially uniform distance from said first lateral side and at a predetermined distance from each other.

By arranging the fastening elements along one lateral side a fastening zone with fastening elements is created. When module units, such as, cupboards, shelves etc. shall be secured to the fastening elements a suitable fastening element within the zone may be chosen. If there are more than two fastening elements arranged along the first lateral side they may be evenly distributed along the first lateral side. Alternatively, the distance between them may differ. By having the fastening elements arranged at substantially first uniform distance from said first lateral side an essentially straight fastening zone is created, when the first lateral side comprises a straight lateral side.

According to at least one exemplary embodiment said at least two fastening elements of said first floor panel are arranged along a first lateral side of said first floor panel, said first floor panel further comprises a third fastening element, and said third fastening element is arranged a distance from a second lateral side of said first floor panel, and said second lateral side is different from said first lateral side. The first and the second lateral side may be two opposite arranged lateral sides or two lateral sides which are arranged in an angle to each other. By arranging the fastening elements along a first lateral side a first fastening zone with fastening elements is created. By having at least a third fastening element arranged a distance from a second lateral side a second fastening zone is created. When module units, such as cupboards, shelves etc. shall be secured to the fastening element a suitable fastening element or several fastening elements within one of the zones or in both zones may be chosen. If there are more than two fastening elements arranged along the first lateral side they may be evenly distributed along the first lateral side. If there is more than one fastening element arranged along the second lateral side they may be evenly distributed along the second lateral side. Alternatively, the distances between the fastening elements may differ. One of said fastening elements in the first fastening zone may be part of the fastening elements in the second fastening zone

According to at least one exemplary embodiment said at least two fastening elements are arranged along a first lateral side and they are distanced a substantially uniform distance from said first lateral side, and at least two further fastening elements are arranged along a second lateral side of said floor panel and they are distanced a substantially uniform distance from said second lateral side, and said second lateral side is different from said first lateral side.
According to at least one exemplary embodiment said first lateral side of said first floor panel is a lateral side which is substantially perpendicular to said lateral side, which is adapted to be arranged next to a lateral side of said second floor panel.

This accomplishes a fastening zone, which may be in the driving direction of the vehicle if the first lateral side is arranged in the driving direction of the vehicle. It is very common to arrange module units along the walls of the cargo or back space, and since they may differ in size and shape a suitable fastener within the fastening zone can be used to fix the module unit to the floor. By arranging the fastening elements along the lateral sides the centre section of the floor panels may be free from fastening elements.

According to at least one exemplary embodiment said first lateral side of said first floor panel is said lateral side, which is adapted to be arranged next to a lateral side of said second floor panel or an lateral side arranged opposite said lateral side, which is adapted to be arranged next to said lateral side of said second floor panel. This accomplishes a fastening zone which may be perpendicular to the driving direction of the service vehicle. It may be advantageous to have a fastening zone close to the driving/passenger compartment, for example if module systems are arranged against the wall, which separates the cargo or back space from the driving/passenger compartment.

According to at least one exemplary embodiment at least one of said fastening elements, of said first and/or said second floor panel, threadedly engages with said first floor panel and/or said second floor panel. That is at least one of said fastening elements of said first floor panel threadedly engages said first floor panel and/or at least one of said fastening elements of said second floor panel threadedly engages said second floor panel. With threadedly engages it is understood that a fastening element is screwed into the floor panel. The outer surface of the fastening element may be provided with threads, which allows the fastening element to be screwed into the floor panel. The floor panel may be made of wood or plastic. Depending on the application the floor panels may also be made in a fibre-reinforced polymer, a foamed polymer, a polymer comprising a matrix structure, a polymer where light weight fillers have been added to the polymer, a laminated polymer or a composite. The fastening element may comprise a tool engaging portion, for example, a hex socket which a tool may be inserted in order to secure the fastening element into the floor panel. Said floor panel may be provided with matching threads.

According to at least one exemplary embodiment at least one of said fastening elements, of said first and/or said second floor panel, is moulded into the first floor panel and/or said second floor panel. That is, at least one of said fastening elements of said first floor panel is moulded into said first floor panel and/or at least one of said fastening elements of said second floor panel is moulded into said second floor panel. If the floor panel is made of plastic, the fastening element may be an insert, which is integrated into the floor when the floor panel is being made by, for example, injection moulding. According to the invention at least one of said fastening elements of said first and/or said second floor panel comprises an inner threaded area, adapted to receive a matching threaded portion. A fastening bracket or any other fastening device may be connected to the fastening element by a threaded securing element, for example a screw or a bolt in order to secure, for example, a module unit. Alternatively, the fastening element may be provided with a bayonet connection.

According to at least one exemplary embodiment the width and the length of said first and/or said second floor panel are equal or smaller than the dimensions of a pallet according to ISO-standards. There are six pallet dimensions according to ISO-Standard (International Organization for Standardization).

According to at least one exemplary embodiment the width and the length of at least one of said floor panels is equal or smaller than the dimensions of an EUR-pallet. A EUR-pallet may also be called Euro-pallet or EPAL-pallet and is the standard European pallet as specified by the European Pallet Association (EPAL). The EUR-pallet has at the time a dimension of 1200x800 mm

According to at least one exemplary embodiment said floor panels have length which is equal or smaller than 1000 mm+/- 10mm or more preferably 800mm +100mm/-50mm. It has been realized by the inventor that the length of approximately 800mm, if all floor panels have the same length, will fit most cargo or back spaces today such that most of the cargo or back space is covered by floor panels in the longitudinal direction of the service vehicle. By having the floor panels equal or smaller than a pallet the floor panels can be transported on a pallet.

According to at least one exemplary embodiment said first and said second floor panels are essentially identical.

According to at least one exemplary embodiment said floor system further comprises a pallet, and said first and said second floor panels are stacked on top of each other and on said pallet. Said pallet may be a pallet according to ISO standards.

According to at least one exemplary embodiment said floor system further comprises an EUR-pallet, and said first and said second are stacked on top of each other and on said EUR-pallet.

According to a second aspect of the invention a vehicle, such as a service vehicle, comprising a floor system as described above is accomplished.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

Other objectives, features and advantages of the present invention will appear from the following detailed disclosure, as well as from the drawings.

### Brief Description of the Drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1 shows an open-up perspective view of a cargo or back space of a service vehicle comprising a floor system according to the invention.
Fig. 2 shows a first embodiment of the floor panels in Fig. 1.
Fig. 3 shows a second embodiment of the floor panels in Fig. 1.
Fig. 4 shows a third embodiment of the floor panels in Fig. 1.
Fig. 5a shows a first embodiment of a fastening element at cross-section A-A in Fig. 1.
Fig. 5b shows the first embodiment of the fastening element in Fig, 5a in perspective.
Fig. 6a shows a second embodiment of a fastening element at cross-section A-A in Fig. 1.
Fig. 6b shows the second embodiment of the fastening element in Fig, 6a in perspective.
Fig. 7 shows a third embodiment of a fastening element at cross-section A-A in Fig. 1.
Fig. 8 shows a fourth embodiment of a fastening element at cross-section A-A in Fig. 1.

All the figures are highly schematic, not necessarily to scale, and they show only parts which are necessary in order to elucidate the invention, other parts being omitted or merely suggested.

### Detailed Description of Exemplary Embodiments

An embodiment of the invention will be described in more detail in the following with reference to the accompanying drawings.

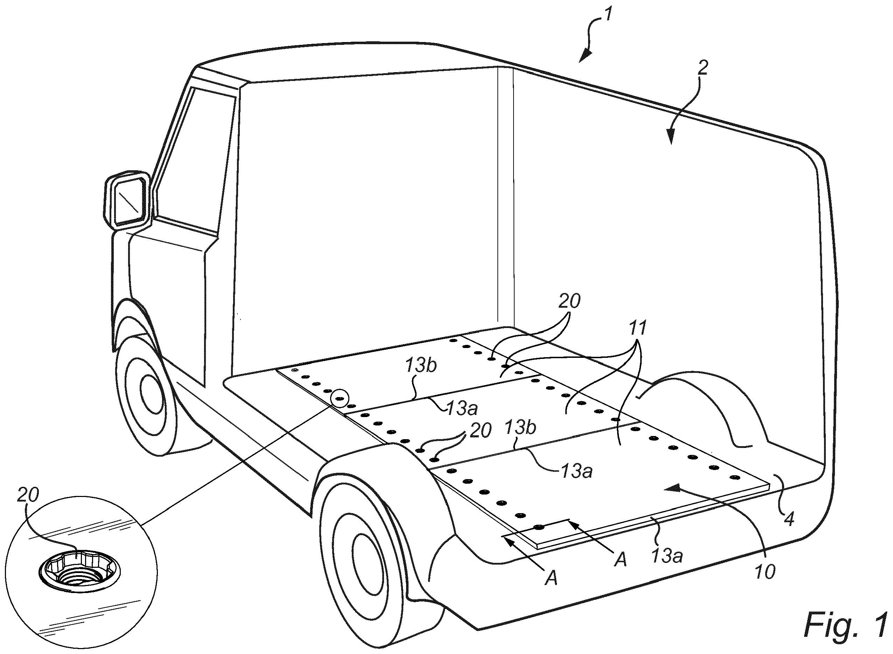

Fig. 1 shows a cargo or a back space 2 in a service vehicle 1 with a floor system 10 arranged on the inner floor 4 of the cargo or back space 2.

The floor system 10 comprises of three floor panels 11, but may however comprise only two or more floor panels. Each floor panel 11 is rectangular shaped and comprises several fastening elements 20. A lateral side 13b of one floor panel 11 is arranged next to a lateral side 13a of another floor panel 11 such that the lateral sides are placed facing and in contact each other. Alternatively, the lateral sides may be arranged adjacent to each other, i.e. at a distance from each other. The floor panels 11 are arranged next to each other in the driving direction of the vehicle 1. Module units (not shown), such as a drawer unit containing for example drawers or shelves, can be placed on the floor panels 11 and secured to the fastening elements 20.

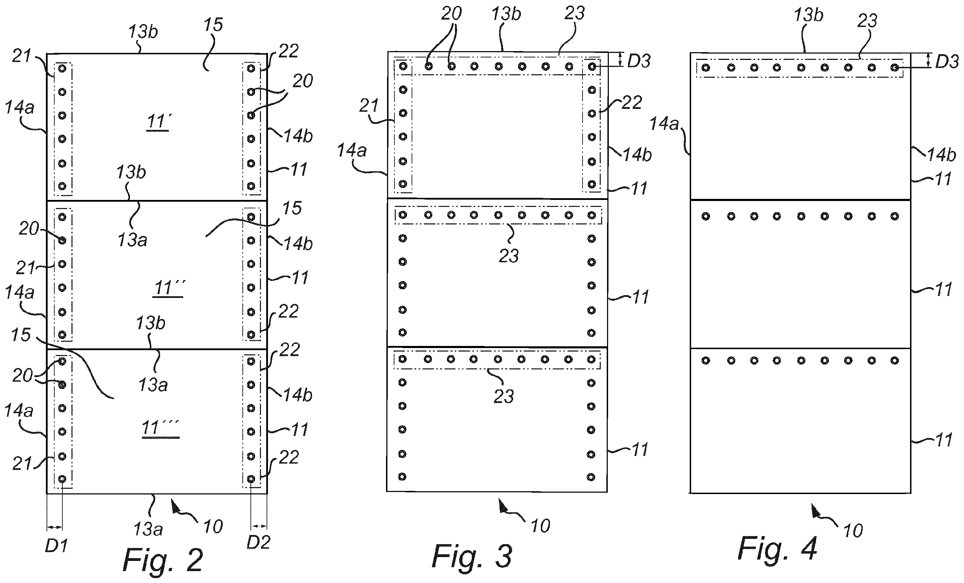

Fig. 2 shows the floor system 10 in Fig 1. The floor system 10 comprises three floor panels 11, i.e. a first floor panel 11' and a second floor panel 11", and a third floor panel 11"'. When referring to all three floor panels the reference number 11 will be used for the floor panels. Each floor panel 11 comprises four lateral sides, a first and a second lateral side 13a, 13b, arranged opposite each other, and a third and a fourth lateral side 14a, 14b, arranged opposite each other and, which are in an angle to the first and the second lateral side 13a, 13b. The first lateral side 13a of the first side panel 11' is arranged adjacent and in contact with the second lateral side 13b of second floor panel 11".

Each floor panels comprises a top surface 15, which is adapted to face the inside of the cargo or back space, and an opposite bottom surface (not shown) adapted to be arranged on the inner floor 4 of the cargo or back space. In each floor panel 11 six fastening elements 20 are arranged along the third lateral side 14a and together they form a first fastening zone 21. Each floor panel 11 further comprise six fastening elements 20 arranged along the fourth lateral side 14b. These six fastening elements 20 form together a second fastening zone 22. The fastening elements 20, which are arranged along the third lateral side 14a are each arranged a predetermined distance D1 from the third lateral side 14a from their centre points. The predetermined distance is essentially the same for all six fastening elements. The fastening elements 20, which are arranged along the fourth lateral side 14b are each arranged a predetermined distance D2 from the fourth lateral side 14b from their centre points. The predetermined distance D2 is the same for all six fastening elements of the second fastening zone 22. The two distances D1, D2 may be the same or they may differ.

Fig. 3 shows a second embodiment of the floor panels 11 in the floor system 10 in Fig. 1 and Fig. 2 The floor system 10 is identical with the floor system in Fig. 2 except that further fastenings elements 20 are arranged along the second lateral side 13b of the floor panels 11. The fastening elements 20 arranged along the second lateral side 13b are each arranged a predetermined distance D3 from the second lateral side 13b from their centre points. The predetermined distance D3 is the same for all the fastening elements 20 along the second lateral side 13b. These fastening elements 20 form a third fastening zone 23, which is arranged transverse to the driving direction of the vehicle 1. One of the fastening elements 20 in the first fastening zone 21 and one of the fastening elements in said second fastening zone 22, which are closest said second lateral side 13b, are also part of said third fastening zone 23.

Fig. 4 shows a third embodiment of the floor panels 11 in the floor system 10 in Fig. 1 and Fig. 2. The third embodiment is similar to the second embodiment in Fig. 3, except that the fastening elements 20 of the first and the second fastening zones 21, 22 are removed, and hence only the fastening elements 20 in the third fastening zone 23 are arranged in the floor panels 11. The third fastening zone 23 may hence be considered being a first fastening zone. The fastening elements 20 arranged along the second lateral side 13b are each arranged a predetermined distance D3 from the second lateral side 13b from their centre points. The predetermined distance D3 is the same for all the fastening elements 20 along the second lateral side 13b.

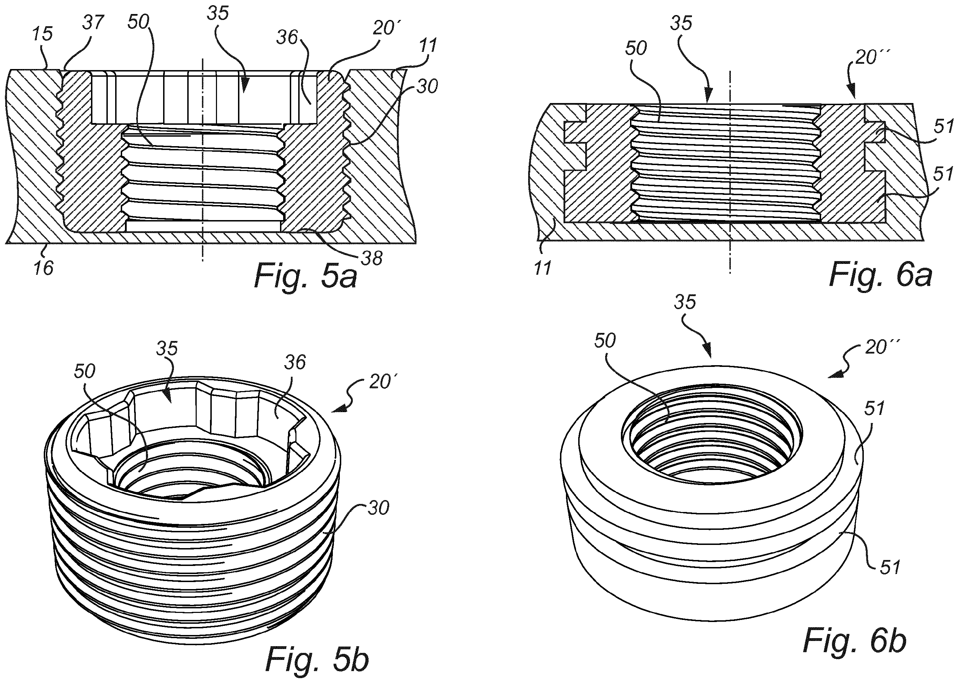

Fig. 5a and 5b shows a first embodiment of the fastening element 20 integrated in the floor panel 11 at the cross-section A-A in Fig 1. The fastening element 20 according to the first embodiment is being referred to as fastening element 20'. The floor panel 11 has a top surface 15, which is adapted to face the inside of the cargo or back space, and an opposite bottom surface 16 adapted to be arranged on the inner floor 4 of the cargo or back space 2. The fastening element 20' is a cylinder shaped fastening element 20', see also Fig. 5b, which shows the fastening element 20' in Fig. 5a in perspective. The fastening element 20' is provided with threads 30 on its outer periphery, which allows the fastening element 20' to threadedly engage with the floor panel 11. The fastening element 20' is completely surrounded by the top surface 15 of the floor panel 11. The floor panel 11 may be of wood or plastic or any other suitable material. The fastening element 20' is screwed into an opening 37, having a bottom 38, in the floor panel 11. The opening 37may be provided with threads, which match the threads 30 on the fastening element 20'. Alternatively, the threads 30 of fastening element 20' may be cut into the material of the floor panel 11 when the fastening element 20' is screwed into the opening. The bottom 38 helps to position the fastening element 20' in the right position in the floor panel 11. The fastening element 20' comprises an internal socket 35, which extends axially into the fastening element 20'. The socket 35 comprises a tool engaging section 36 at the opening of the socket 35 and an internally threaded lower section 50. The tool engaging section 36 is adapted to receive a tool to screw the fastening element 20' into the floor panel 11. A fastener, such as a screw or a bolt may be screwed into the internally threaded lower section 50 in order to secure a module unit.

Figs. 6a and 6b show a second embodiment of the fastening element 20". It comprises a similar shape as the fastening element 20' described in connection to Fig. 5a and Fig. 5b, except that instead of the outer threaded periphery, the fastening element 20" is provided with two outer flanges 51, which protrudes perpendicular to the centre axis A of the fastening element 20". The fastening element 20" is an insert, which is moulded into the floor panel 11, when manufacturing the floor panel 11, for example through injection moulding. The tool engaging section 36 at the opening of the socket 35 (see Figs. 5a and 5b) is absent in this embodiment, since it is not necessary in order to fasten the fastening element 20" to the floor panel 11. The socket 35 is only provided with an in internally threaded section 50.

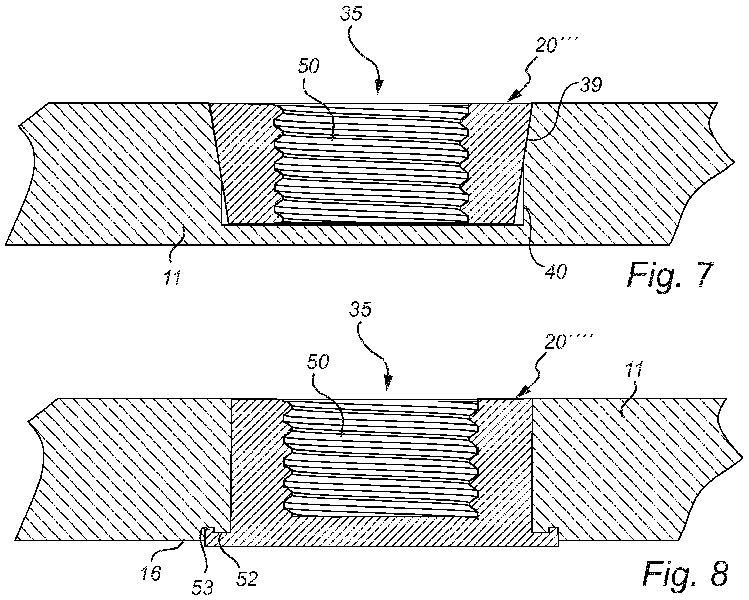

Fig. 7 shows a third embodiment of the fastening element 20'".

This fastening element 20'" comprises a slightly conical outer surface 39, which is pushed or pressed into a slightly smaller hole 40 in the floor panel 11. The tool engaging section at the opening of the socket is absent, since it is not necessary in order to fasten the fastenings element 20'" to the floor panel 11. The socket 35 is only provided with an in internally threaded section 50.

Fig. 8 shows a fourth embodiment of the fastening element 20"".

This fastening element 20"" comprises a flange 52 provided with protrusions 53. The fastening element is pushed into a hole in the floor panel 11 from bottom surface 16, which is adapted to be arranged on the inner floor 4 of the cargo or back space 2. The protrusions 53 are pressed into the floor panel 11 and the fastening element 20"" are hence secured to the floor panel. 11. The fastening element 20"" is provided with a socket 35 with an internally threaded section 50 in order to secure a module unit.

In one floor panel 11 several different kinds of fastening element 20, 20', 20", 20"', 20"" can be used, or all may be of the same kind.

## Claims

1. A floor system (10) adapted to be arranged on an inner floor (4) of a cargo or back space (2) of a service vehicle (1), said floor system (10) comprising a first and a second floor panel (11, 11', 11"), a lateral side (13a) of said first floor panel (11, 11') is adapted to be arranged next to a lateral side (13b) of said second floor panel (11, 11") such that said sides (13a, 13b) are placed facing and adjacent to, or in contact with each other, and said first and said second floor panels (11, 11', 11") are adapted to be arranged next to each other in the driving direction of the service vehicle (1), each one of said first and said second floor panel (11, 11', 11") comprises
- a top surface (15) adapted to face the inside of the cargo or back space (2),
- an opposite bottom surface (16) adapted to be arranged on said inner floor (14),
- at least two fastening elements (20, 20', 20", 20'", 20""), each fastening element (20, 20', 20", 20'", 20"") is at least partly arranged in said floor panel (11, 11', 11") and completely surrounded by said top surface (15) of said floor panel (11, 11', 11"),
- wherein at least one of said fastening elements (20, 20', 20", 20'", 20"") of said first and/or said second floor panel (11) comprises an internally threaded section (50), adapted to receive a matching threaded portion, and
- wherein at least one of said fastening elements (20, 20"), of said first and/or said second floor panel (11), is moulded into said first floor panel (11, 11', 11") and/or said second floor panel (11, 11', 11").

2. A floor system (10) according to claim 1, wherein said at least two fastening elements (20) of said first floor panel (11, 11', 11") are arranged along a first lateral side (13a, 13b, 14a, 14b) of said first floor panel (11, 11', 11") and they are distanced a substantially uniform distance (D1) from said first lateral side and at a predetermined distance from each other.

3. A floor system according to claim 1, wherein said at least two fastening elements (20, 20', 20", 20'", 20"") of said first floor panel (11, 11', 11") are arranged along a first lateral side (13a, 13b, 14a, 14b) of said first floor panel (11, 11', 11"), said first floor panel (11, 11', 11") further comprises a third fastening element (20, 20', 20", 20'", 20""), and said third fastening element (20, 20', 20", 20'", 20"") is arranged a distance from a second lateral side (13a, 13b, 14a, 14b) of said first floor panel (11, 11', 11"), and said second lateral side is different from said first lateral side (13a, 13b, 14a, 14b).

4. A floor system (10) according to any one of the claims 2-3, wherein said first lateral side (13a, 13b) of said first floor panel (11, 11', 11") is said lateral side (13a), which is adapted to be arranged next to a lateral side of said second floor panel (11, 11', 11") or a lateral side (13a, 13b) arranged opposite said lateral side (13a, 13b) which is adapted to be arranged next to said lateral side (13a, 13b) of said second floor panel (11, 11', 11").

5. A floor system (10) according to any one of the claims 2-4, wherein said first lateral side (14a ,14b) of said first floor panel is a lateral side which is substantially perpendicular to said lateral side (13a, 13b), which is adapted to be arranged next to a lateral side (13a, 13b) of said second floor panel.

6. A floor system (10) according to any of the preceding claims, wherein at least one of said fastening elements (20, 20'), of said first and/or said second floor panel (11), threadedly engages with said first floor panel (11, 11', 11") and/or said second floor panel (11, 11', 11").

7. A floor system (10) according to any of the preceding claims, wherein the width and the length of said first and/or said second floor panel (11, 11', 11") are equal or smaller than the dimensions of a pallet according to ISO-standards.

8. A floor system (10) according to any of the preceding claims, wherein said first and said second floor panels (11, 11', 11") are essentially identical.

9. A floor system (10) according to any of the preceding claims, wherein said floor system (10) further comprises a pallet, and said first and said second floor panels (11, 11', 11") are stacked on top of each other and on said pallet.

10. A vehicle (1), such as a service vehicle (1), comprising a floor system (10) according to any one of claims 1- 9.

## Patentansprüche

1. Fußbodensystem (10), das ausgelegt ist, um auf einem inneren Fußboden (4) eines Lade- oder Hinterraums (2) eines Nutzfahrzeugs (1) angeordnet zu sein, wobei das Fußbodensystem (10) eine erste und eine zweite Fußbodenplatte (11, 11', 11") umfasst, wobei eine seitliche Seite (13a) der ersten Fußbodenplatte (11, 11') ausgelegt ist, um neben einer seitlichen Seite (13b) der zweiten Fußbodenplatte (11, 11") derart angeordnet zu sein, dass die Seiten (13a, 13b) einander zugewandt und benachbart zueinander oder in Kontakt miteinander platziert sind, und die erste und zweite Fußbodenplatte (11, 11', 11") ausgelegt sind, um nebeneinander in die Fahrtrichtung des Nutzfahrzeugs (1) angeordnet zu sein,
wobei jede der ersten und der zweiten Fußbodenplatte (11, 11', 11") Folgendes umfasst:
- eine Deckfläche (15), die ausgelegt ist, um dem Inneren des Lade- oder Hinterraums (2) zugewandt zu sein,
- eine entgegengesetzte Bodenfläche (16), die ausgelegt ist, um auf dem inneren Fußboden (14) angeordnet zu sein,
- mindestens zwei Befestigungselemente (20, 20', 20", 20'", 20""), wobei jedes Befestigungselement (20, 20', 20", 20'", 20"") zumindest teilweise in der Fußbodenplatte (11, 11', 11") angeordnet und vollständig von der Deckfläche (15) der Fußbodenplatte (11, 11', 11") umgeben ist,
- wobei mindestens eines der Befestigungselemente (20, 20', 20", 20'", 20"") der ersten und/oder der zweiten Fußbodenplatte (11) einen inneren Gewindebereich (50) umfasst, der ausgelegt ist, um einen passenden Gewindeabschnitt aufzunehmen, und
- wobei mindestens eines der Befestigungselemente (20, 20") der ersten und / oder der zweiten Fußbodenplatte (11) in die erste Fußbodenplatte (11, 11', 11") und / oder die zweite Fußbodenplatte (11, 11', 11") eingegossen ist.

2. Fußbodensystem (10) nach Anspruch 1, wobei die mindestens zwei Befestigungselemente (20) der ersten Fußbodenplatte (11, 11', 11") entlang einer ersten seitlichen Seite (13a, 13b, 14a, 14b) der ersten Fußbodenplatte (11, 11', 11") angeordnet sind und sie in einem im Wesentlichen gleichmäßigen Abstand (D1) von der ersten seitlichen Seite und in einem vorbestimmten Abstand voneinander beabstandet sind.

3. Fußbodensystem nach Anspruch 1, wobei die mindestens zwei Befestigungselemente (20, 20', 20", 20'", 20"") der ersten Fußbodenplatte (11, 11', 11") entlang einer ersten seitlichen Seite (13a, 13b, 14a, 14b) der ersten Fußbodenplatte (11, 11', 11") angeordnet sind, wobei die erste Fußbodenplatte (11, 11'. 11") ferner ein drittes Befestigungselement (20, 20', 20", 20'", 20"") umfasst und das dritte Befestigungselement (20, 20', 20", 20'", 20"") in einem Abstand von einer zweiten seitlichen Seite (13a, 13b, 14a, 14b) der ersten Fußbodenplatte (11, 11', 11") angeordnet ist und sich die zweite seitliche Seite von der ersten seitlichen Seite (13a, 13b, 14a, 14b) unterscheidet.

4. Fußbodensystem (10) nach einem der Ansprüche 2-3, wobei die erste seitliche Seite (13a, 13b) der ersten Fußbodenplatte (11, 11', 11") die seitliche Seite (13a) ist, die ausgelegt ist, um neben einer seitlichen Seite der zweiten Fußbodenplatte (11, 11', 11") angeordnet zu sein, oder eine seitliche Seite (13a, 13b), die entgegengesetzt zu der seitlichen Seite (13a, 13b) angeordnet ist, die ausgelegt ist, um neben der seitlichen Seite (13a, 13b) der zweiten Fußbodenplatte (11, 11', 11") angeordnet zu sein.

5. Fußbodensystem (10) nach einem der Ansprüche 2-4, wobei die erste seitliche Seite (14a, 14b) der ersten Fußbodenplatte eine seitliche Seite ist, die im Wesentlichen senkrecht zu der seitlichen Seite (13a, 13b) ist, die ausgelegt ist, um neben einer seitlichen Seite (13a, 13b) der zweiten Fußbodenplatte angeordnet zu sein.

6. Fußbodensystem (10) nach einem der vorhergehenden Ansprüche, wobei mindestens eines der Befestigungselemente (20, 20') der ersten und/oder der zweiten Fußbodenplatte (11) mit der ersten Fußbodenplatte (11, 11', 11") und/oder der zweiten Fußbodenplatte (11, 11', 11") in Gewindeeingriff kommt.

7. Fußbodensystem (10) nach einem der vorhergehenden Ansprüche, wobei die Breite und die Länge der ersten und/oder der zweiten Fußbodenplatte (11, 11', 11") gleich oder kleiner den Abmessungen einer Palette nach ISO-Standards sind.

8. Fußbodensystem (10) nach einem der vorhergehenden Ansprüche, wobei die erste und die zweite Fußbodenplatte (11, 11', 11") im Wesentlichen identisch sind.

9. Fußbodensystem (10) nach einem der vorhergehenden Ansprüche, wobei das Fußbodensystem (10) ferner eine Palette umfasst und die erste und die zweite Fußbodenplatte (11, 11', 11") übereinander und auf der Palette gestapelt sind.

10. Fahrzeug (1), wie etwa ein Nutzfahrzeug (1), das ein Fußbodensystem (10) nach einem der Ansprüche 1-9 umfasst.

## Revendications

1. Système de plancher (10) pouvant être disposé sur un plancher interne (4) d'un espace de chargement ou arrière (2) d'un véhicule utilitaire (1), ledit système de plancher (10) comprenant un premier et un second panneau de plancher (11, 11', 11"), une face latérale (13a) dudit premier panneau de plancher (11, 11') pouvant être disposée près d'une face latérale (13b) dudit second panneau de plancher (11, 11"), de sorte que lesdites faces (13a, 13b) sont placées face-à-face et adjacentes ou en contact l'une avec l'autre, et lesdits premier et second panneaux de plancher (11, 11', 11") peuvent être disposés les uns près des autres dans le sens de conduite du véhicule utilitaire (1), chacun desdits premier et second panneaux de plancher (11, 11', 11") comprenant
- une surface supérieure (15) pouvant être tournée vers l'intérieur de l'espace de chargement ou arrière (2),
- une surface inférieure opposée (16) pouvant être disposée sur ledit plancher interne (14),
- au moins deux éléments de fixation (20, 20', 20", 20"', 20""), chaque élément de fixation (20, 20', 20", 20"', 20"") étant au moins partiellement disposé dans ledit panneau de plancher (11, 11', 11") et complètement entouré par ladite surface supérieure (15) dudit panneau de plancher (11, 11', 11"),
- dans lequel au moins un desdits éléments de fixation (20, 20', 20", 20'", 20"") desdits premier et/ou second panneaux de plancher (11) comprend une partie filetée en interne (50) pouvant recevoir une section filetée correspondante, et
- dans lequel au moins un desdits éléments de fixation (20, 20") desdits premier et/ou second panneaux de plancher (11) est moulé dans ledit premier panneau de plancher (11, 11', 11") et/ou ledit second panneau de plancher (11, 11', 11").

2. Système de plancher (10) selon la revendication 1, dans lequel lesdits au moins deux éléments de fixation (20) dudit premier panneau de plancher (11, 11', 11") sont disposés le long d'une face latérale (13a, 13b, 14a, 14b) dudit premier panneau de plancher (11, 11', 11") et sont espacés à raison d'une distance substantiellement uniforme (D1) de ladite première face latérale et se trouvent à une distance prédéterminée l'un de l'autre.

3. Système de plancher (10) selon la revendication 1, dans lequel lesdits au moins deux éléments de fixation (20, 20', 20", 20"', 20"") dudit premier panneau de plancher (11, 11', 11") sont disposés le long d'une première face latérale (13a, 13b, 14a, 14b) dudit premier panneau de plancher (11, 11', 11"), ledit premier panneau de plancher (11, 11', 11") comprenant un troisième élément de fixation (20, 20', 20", 20"', 20"") et ledit troisième élément de fixation (20, 20', 20", 20"', 20"") étant disposé à une distance de la seconde face latérale (13a, 13b, 14a, 14b) dudit premier panneau de plancher (11, 11', 11"), et ladite seconde face latérale étant différente de ladite première face latérale (13a, 13b, 14a, 14b).

4. Système de plancher (10) selon l'une quelconque des revendications 2 à 3, dans lequel ladite première face latérale (13a, 13b) dudit premier panneau de plancher (11, 11', 11") est ladite face latérale (13a) qui peut être disposée près d'une face latérale dudit second panneau de plancher (11, 11', 11") ou d'une face latérale (13a, 13b) disposée à l'opposé de ladite face latérale (13a, 13b) qui peut être disposée près de ladite face latérale (13a, 13b) dudit second panneau de plancher (11, 11', 11").

5. Système de plancher (10) selon l'une quelconque des revendications 2 à 4, dans lequel ladite première face latérale (14a, 14b) dudit premier panneau de plancher est une face latérale qui est substantiellement perpendiculaire à ladite face latérale (13a, 13b), qui peut être disposée près de ladite face latérale (13a, 13b) dudit second panneau de plancher.

6. Système de plancher (10) selon l'une quelconque des revendications précédentes, dans lequel au moins un desdits éléments de fixation (20, 20') desdits premier et/ou second panneaux de plancher (11) s'engage par filetage dans ledit premier panneau de plancher (11, 11', 11") et/ou ledit second panneau de plancher (11, 11', 11").

7. Système de plancher (10) selon l'une quelconque des revendications précédentes, dans lequel la largeur et la longueur desdits premier et/ou second panneaux de plancher (11, 11', 11") sont égales ou inférieures aux dimensions d'une palette conforme aux normes ISO.

8. Système de plancher (10) selon l'une quelconque des revendications précédentes, dans lequel lesdits premier et second panneaux de plancher (11, 11', 11") sont substantiellement identiques.

9. Système de plancher (10) selon l'une quelconque des revendications précédentes, ledit système de plancher (10) comprenant en outre une palette, et lesdits premier et second panneaux de plancher (11, 11', 11") étant empilés les uns sur les autres et sur ladite palette.

10. Véhicule (1), tel qu'un véhicule utilitaire (1), comprenant un système de plancher (10) selon l'une quelconque des revendications 1 à 9.
